# EUROPÄISCHE PATENTSCHRIFT

(11) **EP 0 836 298 B1**
(45) Veröffentlichungstag und Bekanntmachung des Hinweises auf die Patenterteilung: **08.02.2006**
(21) Anmeldenummer: 97117286.1
(22) Anmeldetag: 07.10.1997
(51) Int. Cl.: H04L 12/43, H04L 29/02, H04L 12/64, H04L 12/42

(54) **Kommunikationsystem**
Communication system
Système de communication

(30) Priorität: 11.10.1996 DE 19641930
(43) Veröffentlichungstag der Anmeldung: 15.04.1998
(73) Patentinhaber: Harman Becker Automotive Systems GmbH, 76307 Karlsbad (DE); OASIS SiliconSystems Holding AG, 76185 Karlsruhe (DE)
(72) Erfinder: Stiegler, Andreas, 76275 Ettlingen (DE); Hetzel, Herbert, 76889 Schwaigern (DE); Heck, Patrick, 76448 Durmersheim (DE)
(74) Vertreter: Patentanwälte Westphal, Mussgnug & Partner

(56) Entgegenhaltungen:
- EP-A- 0 344 609
- EP-A- 0 725 519
- EP-A- 0 725 522
- DE-U- 29 607 403
- US-A- 5 007 050

## Beschreibung

Die Erfindung betrifft ein Kommunikationssystem mit mehreren Teilnehmern, die jeder mittels einer Schnittstellenschaltung mit einer Ringleitung zur gemeinsamen Übertragung von digitalen Quell- und Steuerdaten verbunden sind, wobei die Quell- und Steuerdaten in einem Format übertragen werden, welches eine getaktete Folge von einzelnen Bitgruppen gleicher Länge vorschreibt, die in Teil-Bitgruppen unterteilt sind, die jeweils einen Datenkanal bilden, wobei wenigstens ein Datenkanal für Steuerdaten vorgesehen ist, die in Datenpaketen mit einer Zieladresse übertragen werden, und wobei die Schnittstellenschaltung jedes Teilnehmers einen Adreßdecoder enthält.

Derartige Kommunikationssysteme werden dort eingesetzt, wo verschiedenartige elektrische und elektronische Geräte, die in teilweise komplizierter Weise untereinander Informationen austauschen sollen, mittels physisch einfach aufgebauter Datenleitungen miteinander vernetzt sind. Über diese Datenleitungen können die Teilnehmer sowohl Quelldaten als auch Steuerdaten austauschen. Beispielsweise im Audiobereich können Audiodaten von Datenquellen wie CD-Spielern, Radioempfängern und Kassettenrekordern an Datensenken wie Verstärker-Lautsprecher-Kombinationen übertragen werden, und gleichzeitig können Steuerdaten übertragen werden, beispielsweise zur Steuerung der Lautstärke Dabei kann ein Gerät gleichzeitig als Datenquelle und -senke ausgebildet sein, wie es beispielsweise bei einem Kassettenrekorder der Fall ist.

Ein Verfahren zur gemeinsamen Übertragung von Quell- und Steuerdaten zwischen über Datenleitungen verbundenen Datenquellen und -senken ist allgemein in der EP-A-0 725 522 oder in der EP-A-0 725 519 beschrieben Dieses Verfahren ist außerdem beschrieben in der Druckschrift "OCC8001 'CONAN' OPTICAL TRANSCEIVER", C&C Electronics Ltd., 1996, die eine Schnittstellenschaltung zur Anbindung einzelner Teilnehmer an die Ringleitung detailliert zeigt Da diese Schnittstellenschaltung über keine eigene Intelligenz verfugt, ist sie nur in Kombination mit einem Mikrocontroller arbeitsfahig, einem für die speziellen Steuerungsaufgaben in dem System eingerichteten Mikroprozessor, der in der Lage ist, einen im Rahmen von Steuerdaten übermittelten Befehl entsprechend dem im System verwendeten Protokoll zu interpretieren, und der dann die Schnittstellenschaltung bzw. einen dazugehörigen Teilnehmer in Übereinstimmung mit dem Befehl steuert.

Die korrekte Interpretation der Befehle im Mikrocomputer setzt voraus, daß die Mikrocomputer aller Teilnehmer des Kommunikationssystems über ein einheitliches Protokoll verfügen. Wenn die Funktionalität des Systems geändert wird, etwa indem ein neuer Teilnehmer hinzugefügt wird, muß auch der Befehlsinterpreter neu erstellt oder geändert werden.

Aufgabe der Erfindung ist es, das Kommunikationssystem zu vereinfachen und Änderungen am System zu erleichtern.

Diese Aufgabe wird bei einem gattungsgemäßen Kommunikationssystem erfindungsgemäß dadurch gelöst, daß wenigstens ein Teilnehmer eine spezielle Adresse hat, die anzeigt, daß ein empfangenes Datenpaket einen Befehlscode enthält, und daß anhand der speziellen Adresse das empfangene Datenpaket unmittelbar einem Befehlsdecoder innerhalb der Schnittstellenschaltung zugeführt wird, der den in dem Datenpaket enthaltenen Befehlscode auf Bitbasis decodiert, wobei die Schnittstellenschaltung bzw. der Teilnehmer auf einen in dem Befehlscode entsprechenden Befehl unmittelbar reagiert.

Anders als im Stand der Technik, in dem ein von einem Teilnehmer empfangener Befehl mit einer diesem Teilnehmer entsprechenden Zieladresse ohne Rücksicht auf den Inhalt des Befehls einem Mikrocontroller zugeführt und dort interpretiert wird, wird gemäß der Erfindung ein Befehl mit der speziellen Adresse nicht anhand irgendeines Protokolls interpretiert, sondern unmittelbar zur Ausführung gebracht.

Dies kann beispielsweise dadurch geschehen, daß die Bitwerte des Befehls unmittelbar in ein Steuerregister geschrieben werden, das Betriebszustände des Teilnehmers mit der speziellen Adresse bestimmt. Die Decodierung besteht in diesem Fall im bitweisen Schreiben des Befehlscodes in das Steuerregister, und die Reaktion auf den Befehl besteht darin, daß der Teilnehmer seinen Betriebszustand automatisch gemäß dem Inhalt des Steuerregisters einstellt. Der Teilnehmer, der den Befehl sendet, weiß, welche Werte des Steuerregisters welchem Betriebszustand des Befehlsempfängers entsprechen, und stellt die in dem Befehl enthaltenen Bits von vornherein passend ein.

Außerdem kann es spezielle Befehle geben, in dem Datenpaket übertragene Daten in der Schnittstellenschaltung zu speichern. Diese Befehle haben dementsprechend Schreibaktionen zur Folge. Ferner kann es Befehle geben, den Teilnehmer mit der speziellen Adresse rückzusetzen oder zu kalibrieren.

Durch die Steueraktionen mittels spezieller Befehle, die keiner Interpretation in irgendeiner prozedurorientierten Programmiersprache bedürfen, kann bei manchen Teilnehmern ein Mikrocontroller eingespart werden, wodurch sich außerdem die Leistungsaufnahme verringert. Das Weglassen des Mikrocontrollers ist insbesondere bei Teilnehmern zweckmäßig, die selbst keine Daten senden, sondern nur empfangen und auf bestimmte Befehle reagieren müssen, wie beispielsweise bei einer Verstärker-Lautsprecher-Kombination, die Audiodaten und außerdem Steuerdaten für die Lautstärke empfängt. Die Erfindung bietet aber auch bei Teilnehmern Vorteile, die über einen eigenen Mikrocontroller verfügen. Indem häufig aktualisierte Daten, beispielsweise eine Tabelle mit der Position aller Teilnehmer im Ring, unmittelbar in entsprechende Register des Teilnehmers geschrieben werden, wird ein vorhandener Mikrocontroller entlastet.

In einer bevorzugten Ausführungsform der Erfindung ist wenigstens ein Befehl eine Anweisung, in der Schnittstellenschaltung des Teilnehmers mit der speziellen Adresse gespeicherte Daten oder Stati über die Ringleitung zurückzusenden, vorzugsweise eingebettet in das empfangene Datenpaket. Die Decodierung besteht in diesem Fall in der Erkennung des Befehls als Leseanforderung, und die Reaktion auf den Befehl besteht in der Rücksendung des Datenpaketes zusammen mit den abgefragten Daten. Da eine Befehlsinterpretation entfällt, erhält der abfragende Teilnehmer in kürzester Zeit Antwort, da er die abgefragten Informationen in der gleichen Bitgruppe oder den gleichen Bitgruppen erhalten kann in der oder in denen er den Lesebefehl abgesandt hat Bei den bekannten Systemen erfolgen solche Leseaktionen in zwei getrennten Nachrichten, einer Anforderung und einer Antwort, wobei die Reaktionszeit unbestimmt ist. Außerdem muß der abgefragte Teilnehmer gegen zwischenzeitliche andere Zugriffe gesichert werden, bis die gesamte Aktion abgeschlossen ist. Demgegenüber ermöglicht es die Erfindung einem Teilnehmer, in einem einzigen Zugriff einen Inhalt in einem anderen Teilnehmer auszulesen, wobei Übertragungszeit deterministisch ist und weiterhin sehr viel weniger Ubertragungszeit benötigt wird.

Die im Rahmen einer solchen Leseaktion übertragenen Datenpakete können außerdem Prüfcodes enthalten, die während des Sendens bzw. Zurücksendens erzeugt werden. Damit kann die korrekte Übertragung der Daten ebenfalls in einer Aktion überprüft werden, wobei nur ein einziges Datenpaket durch das Netz läuft.

In allen oben beschriebenen Fällen können die Schnittstellenschaltungen aller Teilnehmer identisch aufgebaut sein, was die Realisierung des Kommunikationssystems vereinfacht und kostengünstig macht. In diesem Kommunikationssystem kann es Teilnehmer mit einem Mikrocontroller und solche ohne Mikrocontroller geben.

Zur Übertragung der Steuerdatenpakete bei den oben beschriebenen Aktionen können Datenkanäle verwendet werden, die in bekannter Weise durch bestimmte einzelne Bitpositionen in einer Bitgruppe gebildet werden, wobei die Bitpositionen mehrerer aufeinanderfolgender Bitgruppen zu einem Steuerdatenblock definierter Länge zusammengefaßt werden.

In einer vorteilhaften Weiterbildung der Erfindung werden die Steuerdatenpakete über einen Datenkanal übertragen, für den ein beliebig großer zusammenhängender Bereich der Bitpositionen für die Quelldaten innerhalb einer Bitgruppe reservierbar ist. Dadurch können selbst längere Datenpakete, wie sie beispielsweise bei der beschriebenen Leseaktion auftreten können, unter optimaler Ausnutzung der vorhandenen Gesamt-Übertragungskapazität sehr schnell übertragen werden.

Ein Teilnehmer, der Datenpakete sendet, kann aufeinanderfolgende Bits eines zu übertragenden Datenpaketes in einander benachbarte Bitpositionen schreiben, die für Daten reserviert sind, die in Datenpaketen übertragen werden, und ein Datenpaket, das mehr Bitpositionen enthält als der Bereich einer Bitgruppe, der für Daten reserviert ist, die in Datenpaketen übertragen werden, kann in den für Datenpakete reservierten Bereichen mehrerer aufeinanderfolgender Bitgruppen übertragen werden. Die Bitpositionen für Quelldaten, die in einem kontinuierlichen Datenstrom übertragen werden, bilden vorzugsweise ebenfalls einen zusammenhängenden Bereich, wobei der Bereich für die Quelldaten, die in einem kontinuierlichen Datenstrom übertragen werden, und der Bereich für die Daten, die in Datenpaketen übertragen werden, aneinandergrenzen. Die Grenze zwischen dem Bereich für die Quelldaten, die in einem kontinuierlichen Datenstrom übertragen werden, und dem Bereich für die Daten, die in Datenpaketen übertragen werden, kann entweder fest eingestellt sein oder wird im laufenden Betrieb entsprechend der gerade benötigten Übertragungskapazität eingestellt.

Am Austausch von Steuerdaten können alle Teilnehmer im Ring teilnehmen, unabhängig davon, welche Anwendungssoftware bzw. welches Protokoll verwendet wird, und zwar aufgrund ihrer physikalischen Adresse und des in der Bitübertragungsschicht eingebettenen Übertragungsmechanismus. Lediglich die Zieladresse wird bekanntgegeben, der Rest geschieht in den Teilnehmern bzw. in der dazugehörigen Schnittstellenschaltung.

Für Quelldaten, die in einem kontinuierlichen Datenstrom übertragen werden und nachfolgend auch als synchrone Daten bezeichnet werden, ist dies nicht möglich. Jedem Teilnehmer, der Quelldaten in einem kontinuierlichen Datenstrom senden will, muß ein bestimmter Datenkanal zugewiesen werden. Ein Verfahren für eine dezentrale Verwaltung der Datenübertragung, das eine gute Ausnutzung der Datenkanäle ermöglicht, ist in der EP-A-0 752 520 beschrieben. Die Zugangsvoraussetzungen müssen jedoch über ein übergeordnetes Protokoll verhandelt werden, wobei alle Teilnehmer über dieselbe Netzverwaltungsstruktur und über die vollständigen Informationen zur aktuellen Kanalzuordung verfügen müssen. Dies setzt für alle Teilnehmer ein in diesem Bereich gleiches Protokoll voraus, das einen verhältnismäßig hohen Anteil der Systemresourcen jedes Teilnehmers in Anspruch nimmt, d.h. viel Speicherplatz, Rechenleistung und Zeit.

Die erfindungsgemäßen schnellen Steuer- bzw. Leseaktionen ermoglichen nun eine eher zentrale Verwaltung der Kanalzuordnungsinformationen, die eine ähnlich einfache und direkte Handhabung wie beim Austausch von Steuerdaten erlaubt. Dabei müssen nicht allen Teilnehmern die gleichen Informationen zur Verfügung stehen.

Dazu wird das Wissen über alle benutzten und ungenutzten Datenkanäle nur noch an einer Stelle gehalten. Dies ist vorzugsweise der Teilnehmer, der in dem Kommunikationssystem als erstes eingeschaltet wird und der den Takt erzeugt, in dem die Bitgruppen übertragen werden und nach dem sich alle anderen Teilnehmer richten. Da dieser Teilnehmer einzigartig ist, entfällt ein Entscheidungsprozeß, welcher Teilnehmer das vollständige Wissen über die aktuelle Kanalzuteilung halten soll. Dieser Teilnehmer, der nachfolgend auch Taktgenerator genannt wird, nimmt für alle anderen Kanäle die Zuweisung der Kanäle auf Anforderung vor und verbreitet die jeweils gültigen Kanalzuteilungsinformationen auf dem Kommunikationsnetz, beispielsweise in Form einer Zuteilungstabelle. Jeder Teilnehmer kann nun bei Bedarf die seinen Anforderungen entsprechenden Informationen aus dem angebotenen Informationsspektrum herausholen. Dadurch braucht jeder Teilnehmer nur die ihn selbst betreffenden Informationen und nicht mehr die gesamten Verbindungsinformationen des Kommunikationsnetzes zu verwalten. Eine übergeordnete Konfliktverwaltung entfällt.

Ein Teilnehmer, der synchrone Daten übertragen möchte, fordert beim Taktgenerator einen freien Kanal an, und zwar mittels einer oben beschriebenen Leseaktion, wobei die gerade gültige Zuteilungstabelle oder nur der den anfordernden Teilnehmer betreffende Teil davon aus dem Taktgenerator ausgelesen wird. Aus der Zuteilungstabelle wählt der Teilnehmer, der senden möchte, einen freien Kanal. Eine zusätzliche Information des anfordernden Teilnehmers an der Taktgenerator ist erfindungsgemäß nicht notwendig, da der Taktgenerator die Zuteilung selbst veranlaßt hat.

Der Taktgenerator ändert die Zuteilungstabelle entsprechend und gibt die geänderte Zuteilungstabelle vorzugsweise in regelmäßigen Abständen auf dem Kommunikationsnetz bekannt.

Wenn die geänderte Zuteilungstabelle in einer wie oben beschriebenen schnellen Steueraktion verbreitet wird, die in diesem Fall eine Schreibaktion ist, kann die Zuteilungstabelle so häufig bekannt gemacht werden, daß ein Teilnehmer, der synchrone Daten übertragen möchte, die als nächstes verbreitete Zuteilungstabelle abwarten kann, um daraus einen Kanal auszuwählen. Eine Aktion zur Kanalanforderung ist in diesem Fall nicht erforderlich.

Die Ringleitung wird vorzugsweise durch Lichtleiter gebildet, die je zwei Teilnehmer miteinander verbinden und die hohe Datenübertragungsgeschwindigkeiten ermöglichen. Im Falle eines Kommunikationssystems in einem Kraftfahrzeug ist außerdem das geringe Gewicht von Lichtleitern besonders vorteilhaft. Die Erfindung ist aber auch für rein elektrische ringförmige Kommunikationsnetze geeignet, bei denen die Leitungsabschnitte beispielsweise Koaxialkabel sind.

Die Erfindung wird nachfolgend anhand eines Ausführungsbeispiels unter Bezugnahme auf die Zeichnung erläutert; in dieser zeigt:
- Fig. 1: die Schnittstellenschaltungen und Mikrocontroller zweier mit einer Ringleitung verbundener Kommunikationsteilnehmer, zur Erläuterung einer Steuersequenz nach dem Stand der Technik,
- Fig. 2: die Anordnung von Fig. 1, in der ein Mikrocontroller fehlt, zur Erlauterung einer Steuersequenz gemäß der Erfindung,
- Fig. 3: eine detailliertere Ansicht der Schnittstellenschaltungen zweier Teilnehmer, zur Erläuterung einer erfindungsgemäßen Leseaktion,
- Fig. 4: ein bei einer Leseaktion übertragenes Datenpaket und
- Fig. 5: eine Detailansicht eines für die Erfindung besonders geeigneten Bitgruppenformates.

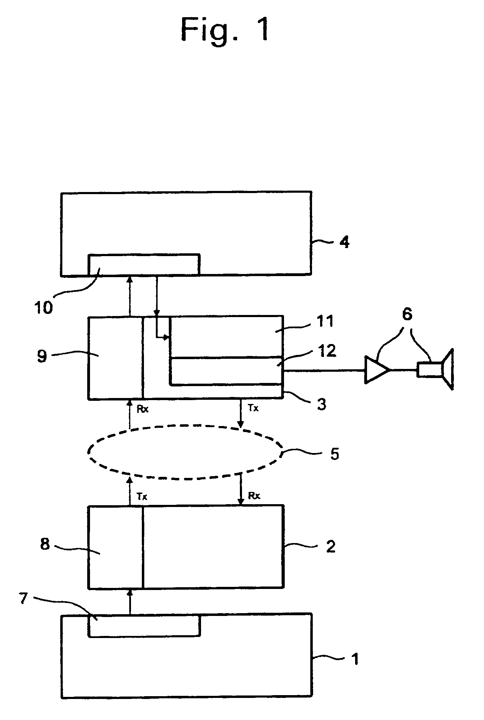

Fig. 1 zeigt einen Mikrocontroller 1 und eine Schnittstellenschaltung 2 eines ersten elektronischen Gerätes sowie eine Schnittstellenschaltung 3 und einen Mikrocontroller 4 eines zweiten elektronischen Gerätes. Die beiden elektronischen Geräte sind jeweils über die Schnittstellenschaltung 2 bzw. 3 an ein schematisch dargestelltes ringförmiges Kommunikationsnetz 5 angeschlossen. Das Kommunikationsnetz 5 enthält mehrere Lichtleiterabschnitte, die jeweils von einem Sendeanschluß Tx einer Schnittstellenschaltung zu einem Empfangsanschluß Rx einer anderen Schnittstellenschaltung führen, so daß eine Ringleitung gebildet wird. Ein Sendeanschluß Tx und ein Empfangsanschluß Rx enthält jeweils einen optoelektronischen Wandler zur Umwandlung von elektronischen Signalen in optische Signale oder zurück.

Das erste elektronische Gerät sei in diesem Beispiel ein Radiogerät, an dem von einem Benutzer eingegeben wird, die Wiedergabelautstärke des zweiten elektronischen Gerätes zu ändern, das eine Verstärker-Lautsprecher-Kombination 6 enthält. Falls über das Kommunikationsnetz mehrere Programme gleichzeitig übertragen werden, kann beispielsweise auch gewünscht sein, das gerade wiedergegebene Programm zu ändern. Um dies zu erreichen, muß die Anwendungssoftware im Mikrocontroller 1, die einen Befehlscodierer 7 umfaßt, anhand des im Kommunikationssystem verwendeten Protokolls eine Steuernachricht in einen Sendepuffer 8 der Schnittstellenschaltung 2 einschreiben und die Übertragung über das Kommunikationsnetz 5 starten. Eine solche Steuernachricht ist im allgemeinen ein Datenpaket, das die Zieladresse des zweiten elektronischen Gerätes oder Kommunikationsteilnehmers und einen Befehlscode enthält.

Wenn die Steuernachricht an der Schnittstellenschaltung 3 ankommt, wird sie anhand der Zieladresse als für die Verstärker-Lautsprecher-Kombination 6 bestimmt erkannt und in einen Empfangspuffer 9 der Schnittstellenschaltung 3 geschrieben. Der Mikrocontroller 4 liest die Steuernachricht aus dem Empfangspuffer 9 aus und interpretiert die Steuernachricht mit Hilfe einer dem Protokoll entsprechenden Software, einem Befehlsinterpreter 10. Durch die Interpretation der Steuernachricht im Befehlsinterpreter 10 kann der Mikrocontroller 4 die tatsächlichen Werte bestimmen, die zu der gewünschten Änderung des Betriebszustandes der Verstärker-Lautsprecher-Kombination 6 führen. Die aktuellen Werte des Betriebszustandes der Verstärker-Lautsprecher-Kombination 6 sind in Form von Einzelbits in Steuer- und Statusregistern 11 der Schnittstellenschaltung 3 gespeichert. Der Mikrocontroller 4 ändert die Steuerwerte in den Steuer- und Statusregistern 11 entsprechend dem gewünschten Betriebszustand, und die geänderten Steuerwerte bewirken, daß Ein-/Ausgangsschaltungen 12 der Schnittstellenschaltung 3, etwa Programmschalter oder Digital-Analog-Wandler zur Erzeugung eines analogen Signals, das die Lautstärke bestimmt, das gewünschte Signal an die Verstärker-Lautsprecher-Kombination 6 leiten.

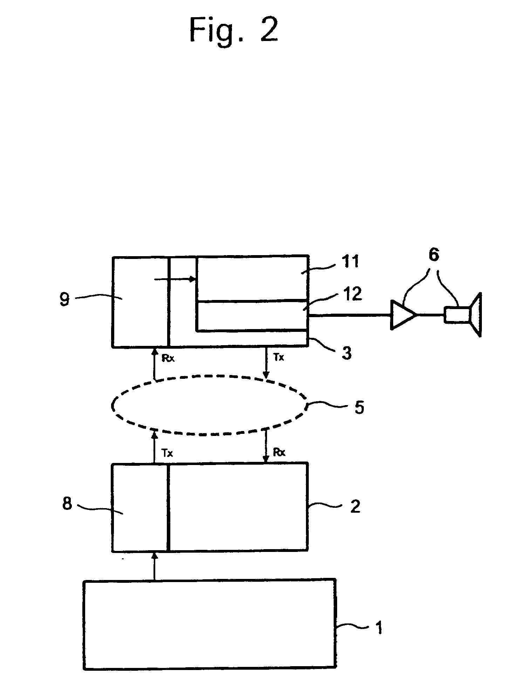

Die in Fig. 2 gezeigte Anordnung zu Ausführung der Erfindung ist der vorstehend beschriebenen Anordnung nach dem Stand der Technik ähnlich, so daß die gleichen Bezugszeichen verwendet werden. Anders als im Stand der Technik benötigt ein Teilnehmer wie die Verstärker-Lautsprecher-Kombination 6, die an der Kommunikation im Netz im wesentlichen passiv teilnimmt, keinen Mikrocontroller 4. Dies wird dadurch ermöglicht, daß die Verstärker-Lautsprecher-Kombination 6 auf die nachfolgend beschriebene Art und Weise über das Kommunikationsnetz 5 steuerbar ist.

Um beispielsweise die Lautstärke der Verstärker-Lautsprecher-Kombination 6 oder das wiedergegebene Programm zu ändern, bestimmt der Mikrocontroller 1, welche Werte in den Steuer- und Statusregistern 11 der Schnittstellenschaltung 3 erforderlich sind, um die gewünschte Änderung herbeizuführen. Dies geschieht unabhängig von dem im System verwendeten Protokoll. Diese Werte werden mit einer speziellen Zieladresse versehen, in den Sendepuffer 8 der Schnittstellenschaltung 2 eingeschrieben und über das Kommunikationsnetz 5 gesendet. Wenn die Schnittstellenschaltung 3 das Datenpaket mit der speziellen Zieladresse empfängt, schreibt sie die der Zieladresse folgenden Daten unmittelbar aus dem Empfangspuffer 9 in die Steuer- und Statusregister 11. Die geänderten Steuerwerte bewirken, daß die Ein-/Ausgangsschaltungen 12 der Schnittstellenschaltung 3 das gewünschte Signal an die Verstärker-Lautsprecher-Kombination 6 leiten.

Die Schnittstellenschaltung 3 verfügt somit über einen Befehlsdecoder, der auf die spezielle Zieladresse reagiert, indem der Inhalt des Empfangspuffers 9 unmittelbar in die Steuer- und Statusregister 11 geschrieben wird

Der Teilnehmer mit der Verstärker-Lautsprecher-Kombination 6 benötigt daher keinen eigenen Mikroprozessor mit in diesem Fall überdimensionierter "Intelligenz", sondern lediglich die standardisierbare Schnittstellenschaltung 3, Digital-Analog-Wandler, Verstärker und Lautsprecher. Ein Aktivlautsprecher zum direkten Anschluß an das Kommunikationsnetz 5 ist somit sehr kostengünstig herstellbar. Die Wahrscheinlichkeit von Steuerfehlern ist geringer, und wegen der Unabhängigkeit der Steuerung von einem übergeordneten Protokoll, das allen Teilnehmern bekannt gemacht werden muß, lassen sich Änderungen oder Ergänzungen des Kommunikationssystems leichter durchführen.

Auf die gleiche Weise wie oben beschrieben können auch irgendwelche anderen in der Schnittstellenschaltung 3 gespeicherten Werte über das Kommunikationsnetz 5 eingestellt werden. Beispielsweise kann eine Tabelle mit der Position aller Teilnehmer im Ring laufend aktualisiert werden, die einem Aktivlautsprecher seine Position im Ring in bezug auf weitere Lautsprecher angibt und ggf. eine Signalverzögerung bewirkt, damit Laufzeitdifferenzen im Kommunikationsnetz 5 nicht zu Phasenverschiebungen in den akustischen Signalen führen. Weitere Beispiele für Steuersignale, mit denen einzelne Schnittstellenschaltungen im Ring unmittelbar angesprochen werden können, ohne daß ein Mikrocontroller davon Kenntnis erhält oder selbst dazu notwendig ist, sind zum Beispiel Signale zum Initialisieren, Rücksetzen oder Kalibrieren eines oder mehrerer Teilnehmer.

Auch bei einem Teilnehmer, der einen Mikrocontroller aufweist, kann die beschriebene Art der Steuerung ohne Inanspruchnahme des Mikrocontrollers zweckmäßig sein. Dieser Teilnehmer erhalt dann zwei oder mehr Adressen. Datenpakete mit der einen Adresse werden an den Mikrocontroller weitergeleitet, und die Bits von Datenpaketen mit einer anderen Adresse werden unmittelbar in dieser Adresse zugeordneten Registern gespeichert bzw. einem elektronischen Gerät oder Geräteteil des Teilnehmers zugeführt.

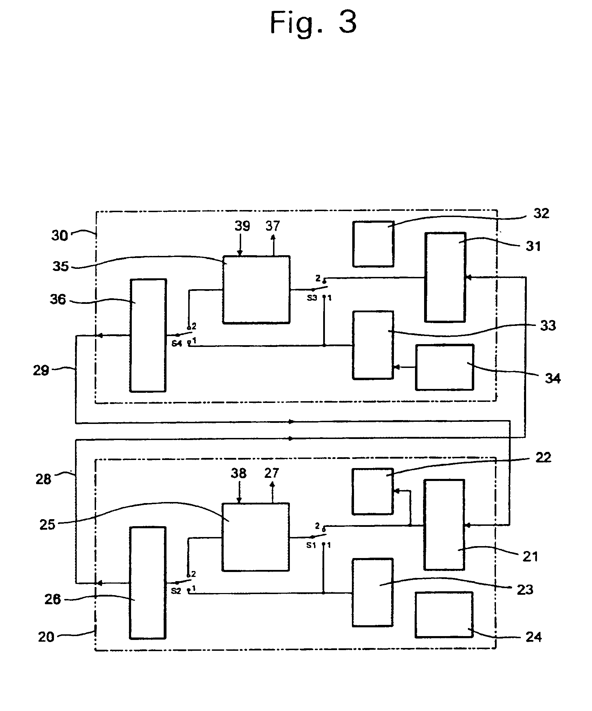

Die beschriebene Befehlsdecodierung auf Bitbasis mit unmittelbarer Reaktion eines Teilnehmers ermöglicht es ferner, in einem Zugriff Daten oder Stati in einem Teilnehmer auszulesen. Dies wird in Verbindung mit Fig. 3 bis 5 erläutert.

Fig. 3 zeigt in strichpunktierten Linien zwei Schnittstellenschaltungen 20 und 30, die jeweils zu einem Teilnehmer im Kommunikationssystem gehören. Die Schnittstellenschaltungen 20 und 30 sind über zwei Lichtleiter 28 und 29 miteinander verbunden, die jeweils von einem Sendeanschluß Tx einer Schnittstellenschaltung 20, 30 zu einem Empfangsanschluß Rx der anderen Schnittstellenschaltung 30 bzw. 20 führen. Die durch die Lichtleiter 28 und 29 gebildete Ringleitung kann noch weitere Lichtleiter umfassen, die die Schnittstellenschaltungen weiterer Teilnehmer in den Ring einschließen.

Die Schnittstellenschaltung 20 enthält eine Empfangsschaltung 21 am Empfangsanschluß Rx, einen Empfangspuffer 22, einen Sendepuffer 23, Statusregister 24, ein sogenanntes CRC-Schaltwerk 25, ein Schaltwerk zur Durchführung eines Prüfsummenverfahrens, und eine Sendeschaltung 26 am Sendeanschluß Tx. Ein Umschalter S1 enthält einen Umschaltkontakt, der mit dem CRC-Schaltwerk 25 verbunden ist, und zwei Festkontakte, die mit der Empfangsschaltung 21 bzw. dem Sendepuffer 23 verbunden sind. Ein Umschalter S2 enthält einen Umschaltkontakt, der mit der Sendeschaltung 26 verbunden ist, und zwei Festkontakte, die mit dem CRC-Schaltwerk 25 bzw. dem Sendepuffer 23 verbunden sind.

Die Schnittstellenschaltung 30 hat den gleichen Aufbau wie die Schnittstellenschaltung 20 und enthält eine Empfangsschaltung 31 am Empfangsanschluß Rx, einen Empfangspuffer 32, einen Sendepuffer 33, Statusregister 34, ein CRC-Schaltwerk 35 und eine Sendeschaltung 36 am Sendeanschluß Tx. Ein Umschalter S3 enthält einen Umschaltkontakt, der mit dem CRC-Schaltwerk 35 verbunden ist, und zwei Festkontakte, die mit der Empfangsschaltung 31 bzw. dem Sendepuffer 33 verbunden sind. Ein Umschalter S4 enthält einen Umschaltkontakt, der mit der Sendeschaltung 36 verbunden ist, und zwei Festkontakte, die mit dem CRC-Schaltwerk 35 bzw. dem Sendepuffer 33 verbunden sind.

Wenn der Teilnehmer mit der Schnittstellenschaltung 20 die Statusregister 34 der Schnittstellenschaltung 30 des Teilnehmers 30 auslesen möchte, startet er eine Lesenachricht, die ein Datenpaket ist, das nacheinander die Zieladresse des Teilnehmers mit der Schnittstellenschaltung 30, einen Befehlscode, der den Lesebefehl anzeigt, und eine Gruppe von leeren Bytes enthält.

Mit dem Start der Übertragung werden die beiden CRC-Schaltwerke 25 und 35 durch Rücksetzsignale 38 und 39 auf Null zurückgesetzt. In der Schnittstellenschaltung 20 wird der Umschalter S1 auf die Position 1 gesetzt und wird der Umschalter S2 auf die Position 1 gesetzt. In der Schnittstellenschaltung 30 wird der Umschalter S3 auf die Position 2 gesetzt und wird der Umschalter S4 auf die Position 2 gesetzt. Die Schnittstellenschaltung 20 überträgt die Zieladresse und den Befehlscode der Lesenachricht aus dem Sendepuffer 23 über die Sendeschaltung 26 und den Lichtleiter 28 an die Empfangsschaltung 31 der Schnittstellenschaltung 30 und errechnet dabei im CRC-Schaltwerk 25 einen entsprechenden Prüfcode oder Prüfwert 27.

Wenn bei der Übertragung kein Fehler aufgetreten ist, errechnet das CRC-Schaltwerk 35 in der Schnittstellenschaltung 30 aus der Zieladresse und dem Befehlscode einen Prüfwert 37, der mit dem Prüfwert 27 übereinstimmt. Danach setzt die Schnittstellenschaltung 20 den Umschalter S1 auf die Position 2, und die Schnittstellenschaltung 30 setzt den Umschalter S3 auf die Position 1. Der oder die durch den Befehlscode spezifizierten Werte aus den Statusregistern 34 werden nun durch die Schnittstellenschaltung 30 über den Sendepuffer 33, das CRC-Schaltwerk 35, die Sendeschaltung 36 und den Lichtleiter 29 an die Empfangsschaltung 21, das CRC-Schaltwerk 25 und in den Empfangspuffer 22 der Schnittstellenschaltung 20 übertragen. Dabei wird in den CRC-Schaltwerken 25 und 35 jeweils der entsprechende Prüfwert weiterberechnet. Wenn kein Übertragungsfehler aufgetreten ist, sind die Prüfwerte 27 und 37 immer noch identisch. Zuletzt legt die Schnittstellenschaltung 30 den Umschalter S4 auf die Position 2 und überträgt den errechneten Prüfwert 37 über die Sendeschaltung 36 und den Lichtleiter 28 an die Empfangsschaltung 21 der Schnittstellenschaltung 20 und deren CRC-Schaltwerk 25. Nachdem die Prüfwertberechnung im CRC-Schaltwerk 25 mit dem Prüfwert 37 von der Schnittstellenschaltung 30 durchgeführt wurde, können anhand dieses resultierenden Wertes folgende Aussage getroffen werden:
1) Wenn der resultierende Prüfwert im CRC-Schaltwerk 25 gleich Null ist, war die Übertragung fehlerlos. Die Frage (die Zieladresse und der Lesebefehl) sowie die Antwort gehören zusammen und sind korrekt.
2) Wenn der resultierende Prüfwert im CRC-Schaltwerk 25 ungleich Null ist, war die Übertragung fehlerhaft. Die Frage und/oder die Antwort sind nicht gültig. Der Lesebefehl kann gegebenenfalls wiederholt werden.

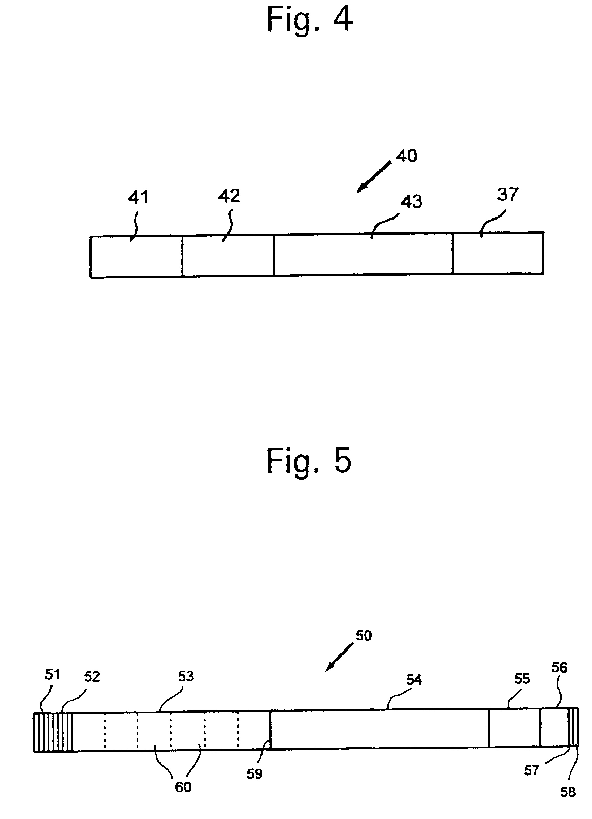

Ein Datenpaket 40, das von der Schnittstellenschaltung 30 über den Lichtleiter 29 an die Schnittstellenschaltung übertragen wird, ist in Fig. 4 dargestellt. Wie beschrieben, enthält das Datenpaket 40 eine Zieladresse 41, einen Befehlscode 42, gelesene Daten 43 und einen Prüfwert oder Prüfcode 37.

Die Zieladresse des Teilnehmers mit der Schnittstellenschaltung 30 ist somit ebenso wie bei den im Zusammenhang mit Fig. 2 beschriebenen Steuerbefehlen eine spezielle Zieladresse, mit der die Schnittstellenschaltung 30 selbsttätig reagiert. Die Schnittstellenschaltung 30 reagiert auf den Empfang der speziellen Zieladresse damit, daß der mit dieser Zieladresse übertragene Bitstrom durch ihr CRC-Schaltwerk 35 geht. Der Befehlscode 41 wird dekodiert und anschließend im CRC Schaltwerk 35 zur Erzeugung des Prüfwertes verwendet, und anschließend wird das CRC-Schaltwerk 35 zur Erzeugung des Prüfwertes 37 für die Werte aus den Statusregistern 34 verwendet. Auf diese Weise kann der anfordernde Teilnehmer, der die Schnittstellenschaltung 20 enthält, sehen, ob die ankommenden Daten korrekt übertragen werden, wenn der Prüfwert 27 korrekt ist.

Anstelle der CRC-Schaltwerke 25 und 35 können auch irgendwelche anderen bekannten Fehlerprüf- oder Fehlerkorrekturschaltungen verwendet werden, um Prüfcodes oder Prüfwerte zur Kontrolle der Übertragung zu erzeugen. Die Art und Weise, in der die beschriebene Schaltung an andere Fehlerprüfverfahren anzupassen ist, ist für den Fachmann offenkundig. Gegebenenfalls muß ein Prüfwert auch beim Senden des Datenpaketes mit übertragen werden, d.h. zusätzlich zu der Zieladresse und dem Befehlscode. Leerbytes in dem gesendeten Datenpaket sind ebenfalls nicht unbedingt erforderlich.

Ein Bitgruppenformat, das für die Übertragung der im Zusammenhang mit Fig. 2 beschriebenen Steuerbefehle oder der Datenpakete 40 von Fig. 4 in dem Kommunikationssystem besonders geeignet ist, ist in Fig. 5 dargestellt.

Eine Bitgruppe 50, die auch Frame genannt wird, umfaßt 64 Bytes, d.h. 512 Bits. Die Bitgruppe 50 enthält eine 4 Bits umfassende Präambel 51, die den PLL-Schaltungen der Teilnehmer das Aufsynchronisieren auf einen empfangenen Takt ermöglicht. Jeweils 16 Bitgruppen 50 sind zu einem Block zusammengefaßt, wobei die erste Präambel 51 jedes Blocks ein spezielles Block-Kennzeichnungsbit enthält. An die Präambel 51 schließt sich ein 4 Bits umfassendes Datenfeld 52 an, dessen Funktion weiter unten erläutert wird. An das Datenfeld 52 schließt sich ein Bereich 53 für synchrone Daten an, d.h. für Quelldaten, die im Gegensatz zu Datenpaketen in einem kontinuierlichen Datenstrom übertragen werden, wie es z.B. bei verschiedenen Arten von Audiodaten der Fall ist. Der Bereich 53 kann auf eine bekannte Art und Weise in mehrere Teil-Bitgruppen 60 gleicher Länge unterteilt sein, die jeweils einem bestimmten Teilnehmer im Kommunikationssystem zugeordnet sind. Die Zuordnung zwischen den Teil-Bitgruppen 60 und den jeweiligen Teilnehmern wird in der Präambel 51 festgehalten.

An den Bereich 53 für synchrone Daten schließt sich ein Bereich 54 für Daten an, die in Datenpaketen übertragen werden. Zur Unterscheidung von den synchronen Daten werden die in Paketen übertragenen Daten nachfolgend auch als asynchrone Daten bezeichnet, obwohl sie während der Übertragung über das Kommunikationsnetz an den Takt gebunden sind, den irgendein Teilnehmer vorgibt. Der Bereich 53 für synchrone Daten und der Bereich 54 für asynchrone Daten belegen zusammen 60 Bytes der Bitgruppe 50. Die Gesamt-Übertragungskapazität des Netzes für synchrone und asynchrone Quelldaten wird durch diese 60 Bytes gebildet. Die Größe des Bereichs 54 für asynchrone Daten kann 0, 4, 8, ... 56 oder 60 Bytes betragen und wird durch einen Wert ASY (ASY=0, 1, 2, ... 15) festgelegt, der in dem Datenfeld 52 gespeichert ist, das dem Bereich 53 für synchrone Daten vorhergeht. Der Bereich 54 für synchrone Daten umfaßt dementsprechend 60 - (4 x ASY) Bytes. Der Wert ASY kann entweder fest voreingestellt sein oder aber dynamisch gemäß dem aktuellen Bedarf an Übertragungskapazität für synchrone bzw. asynchrone Daten eingestellt werden.

Dem Bereich 54 für asynchrone Daten folgt ein 16 Bits oder 2 Bytes großes Datenfeld 55 für Kontroll-Bits. Die Kontroll-Bits eines Blocks, d.h. 32 Bytes oder 192 Bits, bilden eine Kontroll- oder Steuernachricht. An das Datenfeld 55 für Kontroll-Bits schließt sich ein Datenfeld 56 an, das aus 6 Bits besteht. Ein taktgebender Teilnehmer oder Taktgenerator schreibt eine "0" in das Datenfeld 56, und der Wert im Datenfeld 56 wird von jedem folgenden Teilnehmer im Ring um Eins erhöht, so daß jeder Teilnehmer von in diesem Fall maximal 64 Teilnehmern unmittelbare Kenntnis von seiner Position im Ring hat.

Dem Datenfeld 55 folgt eine einzelne Bitposition 57, mit der angezeigt wird, ob sich ein Datenpaket im Bereich 54 für asynchrone Daten in einer auf die Bitgruppe 50 folgenden Bitgruppe fortsetzt oder nicht. Der Bitposition 57 folgt eine Bitposition 58 für ein Paritäts-Bit zur Fehlererkennung.

Die im Zusammenhang mit Fig. 2 beschriebenen Steuerbefehle oder der Datenpakete 40 von Fig. 4 können in an sich bekannter Weise in den Kontroll-Bits des Datenfeldes 55 übertragen werden. Eine schnellere Übertragung ermöglicht jedoch eine Übertragung über die Bereiche 54 für asynchrone Daten. Dabei wird ein Datenpaket auf eine solche Weise in den Bereich 54 für asynchrone Daten eingefügt, daß es an der Grenze 59 zwischen dem Bereich 6 für synchrone Daten und dem Bereich 54 für asynchrone Daten beginnt. Im Falle, daß ein Datenpaket länger als der Bereich 54 für asynchrone Daten in einer Bitgruppe 50 ist, wird der Rest des Datenpaketes in der auf die Bitgruppe 50 folgenden Bitgruppen und gegebenenfalls weiteren Bitgruppen übertragen, was durch den Merker an der Bitposition 57 angezeigt wird.

Die Teil-Bitgruppen 60 bilden Kanäle für synchrone Daten, d.h. für Daten, die in einem kontinuierlichen Bitstrom übertragen werden. Ein Teilnehmer, der über einen solchen Kanal senden möchte, kann bei dem Teilnehmer, der den Takt generiert und der die Kanalzuteilung zentral verwaltet, mittels einer oben beschriebenen Leseaktion einen freien Kanal anfordern. Der Taktgenerator gibt zyklisch eine Tabelle mit der gültigen Kanalzuteilung an alle Teilnehmer bekannt, und zwar vorzugsweise durch Steuerbefehle der weiter oben beschriebenen Art, um die Tabelle oder Teile davon in entsprechende Register der einzelnen Teilnehmer einzuschreiben. Der einen freien Kanal anfordernde Teilnehmer wählt seinen freien Kanal aus und sendet seine synchronen Daten über diesen Kanal.

## Patentansprüche

1. Kommunikationssystem mit mehreren Teilnehmern, die jeder mittels einer Schnittstellenschaltung mit einer Ringleitung zur gemeinsamen Übertragung von digitalen Quell- und Steuerdaten verbunden sind, wobei die Quell- und Steuerdaten in einem Format übertragen werden, welches eine getaktete Folge von einzelnen Bitgruppen gleicher Länge vorschreibt, die in Teil-Bitgruppen unterteilt sind, die jeweils einen Datenkanal bilden, wobei wenigstens ein Datenkanal für Steuerdaten vorgesehen ist, die in Datenpaketen mit einer Zieladresse übertragen werden, und wobei die Schnittstellenschaltung jedes Teilnehmers einen Adreßdecoder enthält, **dadurch gekennzeichnet, daß** wenigstens ein Teilnehmer eine spezielle Adresse (40) hat, die anzeigt, daß ein empfangenes Datenpaket einen Befehlscode enthält, und daß anhand der speziellen Adresse das empfangene Datenpaket unmittelbar einem Befehlsdecoder innerhalb der Schnittstellenschaltung (3, 30) zugeführt wird, der den in dem Datenpaket enthaltenen Befehlscode (41) auf Bitbasis decodiert, wobei die Schnittstellenschaltung bzw. der Teilnehmer auf einen in dem Befehlscode entsprechenden Befehl unmittelbar reagiert.

2. Kommunikationssystem nach Anspruch 1, **dadurch gekennzeichnet, daß** der Befehlsdecoder Steuerregister (11) umfaßt, die Betriebszustände des Teilnehmers mit der speziellen Adresse bestimmen.

3. Kommunikationssystem nach Anspruch 1 oder 2, **dadurch gekennzeichnet, daß** wenigstens ein Befehl eine Anweisung ist, in dem Datenpaket übertragene Daten in der Schnittstellenschaltung (3) des Teilnehmers mit der speziellen Adresse zu speichern.

4. Kommunikationssystem nach einem der vorhergehenden Ansprüche, **dadurch gekennzeichnet, daß** wenigstens ein Befehl eine Anweisung zum Rücksetzen und/oder Kalibrieren des Teilnehmers mit der speziellen Adresse ist.

5. Kommunikationssystem nach einem der vorhergehenden Ansprüche, **dadurch gekennzeichnet, daß** der Teilnehmer mit der speziellen Adresse ein Empfänger für Quelldaten ist.

6. Kommunikationssystem nach einem der vorhergehenden Ansprüche, **dadurch gekennzeichnet, daß** wenigstens ein Befehl eine Anweisung ist, in der Schnittstellenschaltung (3) des Teilnehmers mit der speziellen Adresse gespeicherte Daten über die Ringleitung (5) zu senden.

7. Kommunikationssystem nach Anspruch 6, **dadurch gekennzeichnet, daß** die in der Schnittstellenschaltung (3) gespeicherten Daten in einem Datenpaket (40) gesendet werden, das außerdem Daten aus dem empfangenen Datenpaket enthält.

8. Kommunikationssystem nach Anspruch 7, **dadurch gekennzeichnet, daß** das empfangene und/oder das gesendete Datenpaket einen Prüfcode (37) enthält.

9. Kommunikationssystem nach einem der vorhergehenden Ansprüche, **dadurch gekennzeichnet, daß** die Schnittstellenschaltungen (2, 3; 20, 30) aller Teilnehmer identisch aufgebaut sind.

10. Kommunikationssystem nach einem der vorhergehenden Ansprüche, **dadurch gekennzeichnet, daß** ein beliebig großer zusammenhängender Bereich (54) der Bitpositionen für die Quelldaten innerhalb einer Bitgruppe (50) für Daten reservierbar ist, die in Datenpaketen übertragen werden.

11. Kommunikationssystem nach Anspruch 10, **dadurch gekennzeichnet, daß** ein Teilnehmer, der Datenpakete sendet, aufeinanderfolgende Bits eines zu übertragenden Datenpaketes in einander benachbarte Bitpositionen schreibt, die für Daten reserviert sind, die in Datenpaketen übertragen werden, und daß ein Datenpaket, das mehr Bitpositionen enthält als der Bereich (54) einer Bitgruppe, der für Daten reserviert ist, die in Datenpaketen übertragen werden, in den für Datenpakete reservierten Bereichen mehrerer aufeinanderfolgender Bitgruppen übertragen wird.

12. Kommunikationssystem nach Anspruch 10 oder 11, **dadurch gekennzeichnet, daß** für Quelldaten, die in einem kontinuierlichen Datenstrom übertragen werden, reservierte Bitpositionen einen zusammenhängenden Bereich (53) bilden, daß der Bereich (53) fur die Quelldaten, die in einem kontinuierlichen Datenstrom übertragen werden, und der Bereich (54) für die Daten, die in Datenpaketen übertragen werden, aneinandergrenzen, und daß die Grenze (59) zwischen dem Bereich für die Quelldaten, die in einem kontinuierlichen Datenstrom übertragen werden, und dem Bereich für die Daten, die in Datenpaketen übertragen werden, entweder fest eingestellt ist oder im laufenden Betrieb entsprechend der gerade benötigten Übertragungskapazität eingestellt wird.

13. Kommunikationssystem nach einem der Ansprüche 6 bis 12, **dadurch gekennzeichnet, daß** die Anweisung, in der Schnittstellenschaltung des Teilnehmers mit der speziellen Adresse gespeicherte Daten über die Ringleitung (28, 29) zu senden, eine Anforderung eines Teilnehmers, der Quelldaten senden möchte, die in einem kontinuierlichen Datenstrom übertragen werden, nach einem freien Kanal ist.

14. Kommunikationssystem nach einem der Ansprüche 1 bis 13, **dadurch gekennzeichnet, daß** jeder Teilnehmer, der Quelldaten zu senden imstande ist, die in einem kontinuierlichen Datenstrom übertragen werden, eine spezielle Adresse hat und/oder einen speziellen Befehl kennt, mit der bzw. mit dem Informationen zur aktuellen Kanalzuteilung in einem empfangenen Datenpaket unmittelbar in entsprechende Register geschrieben werden.

15. Kommunikationssystem nach einem der vorhergehenden Ansprüche, **dadurch gekennzeichnet, daß** ein einziger Teilnehmer vollständige Informationen zur aktuellen Zuteilung von Kanälen für Quelldaten verwaltet, die in kontinuierlichen Datenströmen übertragen werden.

16. Kommunikationsnetz nach Anspruch 15, **dadurch gekennzeichnet, daß** der Teilnehmer, der die vollständigen Informationen zur aktuellen Kanalzuteilung verwaltet, derjenige Teilnehmer ist, der den Systemtakt erzeugt.

17. Kommunikationssystem nach einem der vorhergehenden Ansprüche, **dadurch gekennzeichnet, daß** die Ringleitung durch Lichtleiter (5; 28, 29) gebildet wird, die je zwei Teilnehmer miteinander verbinden.

18. Kommunikationssystem nach einem der vorhergehenden Ansprüche, zur Verwendung in einem Kraftfahrzeug.

## Claims

1. Communications system with a plurality of subscribers which are each connected by means of an interface circuit to a ring feeder for common transmission of digital source data and control data, wherein the source data and control data are transmitted in a format which prescribes a clocked sequence of individual bit groups of equal length which are sub-divided into component bit groups each forming a data channel, wherein at least one data channel is provided for control data which are transmitted in data packets with a target address, and wherein the interface circuit of each subscriber contains an address decoder, **characterised in that** at least one subscriber has a special address (40) which indicates that a received data packet contains an instruction code and that with the aid of the special address a received data packet is delivered directly to an instruction decoder within the interface circuit (3, 30) which decodes the instruction code (41) contained in the data packet bit by bit, wherein the interface circuit or the subscriber responds directly to a corresponding instruction in the instruction code.

2. Communications system as claimed in Claim 1, **characterised in that** the instruction decoder comprises control registers (11) which determine the operational states of the subscriber with the special address.

3. Communications system as claimed in Claim 1 or 2, **characterised in that** at least one instruction is an instruction to store data transmitted in the data packet in the interface circuit (3) of the subscriber with the special address.

4. Communications system as claimed in any one of the preceding claims, **characterised in that** at least one instruction is an instruction to reset and/or calibrate the subscriber with the special address.

5. Communications system as claimed in any one of the preceding claims, **characterised in that** the subscriber with the special address is a receiver for source data.

6. Communications system as claimed in any one of the preceding claims, **characterised in that** at least one instruction is an instruction to transmit data stored in the interface circuit (3) of the subscriber with the special address via the ring feeder (5).

7. Communications system as claimed in Claim 6, **characterised in that** the data stored in the interface circuit (3) are transmitted in a data packet (40) which also contains data from the received data packet.

8. Communications system as claimed in Claim 7, **characterised in that** the data packet which is received and/or transmitted contains a check code (37).

9. Communications system as claimed in any one of the preceding claims, **characterised in that** the interface circuits (2, 3; 20, 30) of all the subscribers are constructed in an identical manner.

10. Communications system as claimed in any one of the preceding claims, **characterised in that** a contiguous region (54) of any size of the bit positions can be reserved for the source data within a bit group (50) which are transmitted in data packets.

11. Communications system as claimed in Claim 10, **characterised in that** a subscriber which transmits data packets writes successive bits of a data packet to be transmitted into mutually adjacent bit positions which are reserved for data which are transmitted in data packets, and that a data packet which contains more bit positions than the region (54) of a bit group reserved for data which are transmitted in data packets will transmit a plurality of successive bit groups in the regions reserved for data packets.

12. Communications system as claimed in Claim 10 or 11, **characterised in that** reserved bit positions form a contiguous region (53) for source data which are transmitted in a continuous data stream, that the region (53) for the source data which are transmitted in a continuous data stream and the region (54) for the data which are transmitted in data packets are adjacent to one another, and that the boundary (59) between the region for the source data which are transmitted in a continuous data stream and the region for the data which are transmitted in data packets is either set permanently or is set during operation according to the currently required transmission capacity.

13. Communications system as claimed in any one of Claims 6 to 12, **characterised in that** the instruction to transmit data stored in the interface circuit of the subscriber with the special address via the ring feeder (28, 29) is a request for a free channel from a subscriber which would like to transmit source data which are transmitted in a continuous data stream.

14. Communications system as claimed in any one of Claims 1 to 13, **characterised in that** each subscriber which is capable of transmitting source data which are transmitted in a continuous data stream has a special address and/or recognises a special instruction by means of which information concerning current channel allocation in a received data packet is written directly into appropriate registers.

15. Communications system as claimed in any one of the preceding claims, **characterised in that** a single subscriber manages complete information concerning the current allocation of channels for source data which are transmitted in continuous data streams.

16. Communications network as claimed in Claim 15, **characterised in** the subscriber which manages the complete information concerning the current allocation of channels is the subscriber which generates the system clock pulse.

17. Communications system as claimed in any one of the preceding claims, **characterised in that** the ring feeder is formed by optical fibres (5; 28, 29) which each connect two subscribers to one another.

18. Communications system as claimed in any one of the preceding claims for use in a motor vehicle.

## Revendications

1. Système de communication avec plusieurs participants, dont chacun est relié à une ligne en boucle par l'intermédiaire d'un circuit d'interface pour le transfert commun de données numériques de base et de commande, les données de base et les données de commande étant transférées dans un format qui prescrit une séquence cadencée de groupes de bits individuels de longueur identique, qui sont divisés en groupes de bits partiels, qui forment chacun un canal de données, au moins un canal de données étant prévu pour des données de commande qui sont transférées en paquets de données avec une adresse cible, et le circuit d'interface de chaque participant contenant un décodeur d'adresse,
**caractérisé en ce qu'**au moins un participant détient une adresse spéciale (40) qui indique qu'un paquet de données réceptionné contient un code d'instructions et qu'à l'aide de l'adresse spéciale, le paquet de données réceptionné est directement acheminé vers un décodeur d'instructions au sein du circuit d'interface (3, 30) qui décode le code d'instructions (41) contenu dans le paquet de données sur la base de bits, le circuit d'interface, respectivement le participant réagissant directement à une instruction correspondante contenue dans le code d'instructions.

2. Système de communication selon la revendication 1, **caractérisé en ce que** le décodeur d'instructions comprend des registres de commande (11), qui déterminent des états de service du participant détenant l'adresse spéciale.

3. Système de communication selon la revendication 1 ou 2, **caractérisé en ce qu'**au moins une instruction est une consigne ordonnant la sauvegarde des données transférées dans le paquet de données dans le circuit d'interface (3) du participant détenant l'adresse spéciale.

4. Système de communication selon l'une quelconque des revendications précédentes, **caractérisé en ce qu'**au moins une instruction est une consigne ordonnant la réinitialisation et/ou le calibrage du participant détenant l'adresse spéciale.

5. Système de communication selon l'une quelconque des revendications précédentes, **caractérisé en ce que** le participant détenant l'adresse spéciale est un destinataire de données de base.

6. Système de communication selon l'une quelconque des revendications précédentes, **caractérisé en ce qu'**au moins une instruction est une consigne ordonnant l'envoi des données sauvegardées dans le circuit d'interface (3) du participant détenant l'adresse spéciale par l'intermédiaire de la ligne en boucle (5).

7. Système de communication selon la revendication 6, **caractérisé en ce que** les données sauvegardées dans le circuit d'interface (3) sont envoyées dans un paquet de données (40) contenant par ailleurs des données issues du paquet de données réceptionné.

8. Système de communication selon la revendication 7, **caractérisé en ce que** le paquet de données réceptionné et/ou envoyé contient un code de contrôle (37).

9. Système de communication selon l'une quelconque des revendications précédentes, **caractérisé en ce que** les circuits d'interface (2, 3 ; 20, 30) de tous les participants présentent une structure identique.

10. Système de communication selon l'une quelconque des revendications précédentes, **caractérisé en ce qu'**une zone continue (54) d'une dimension quelconque des positions de bits pour les données de base peut être réservée au sein d'un groupe de bits (50) pour des données qui sont transférées par paquets de données.

11. Système de communication selon la revendication 10, **caractérisé en ce qu'**un participant, qui envoie des paquets de données, écrit des bits consécutifs d'un paquet de données à transférer dans des positions de bits voisines les unes des autres, qui sont réservées pour des données transférées par paquets de données et **en ce qu'**un paquet de données qui contient un plus grand nombre de positions de bits que la zone (54) d'un groupe de bits, qui est réservée pour des données transférées par paquets de données, est transféré dans les zones réservées aux paquets de données de plusieurs groupes de bits consécutifs.

12. Système de communication selon la revendication 10 ou 11, **caractérisé en ce que** des positions de bits réservées forment une zone continue (53) pour des données de base transférées dans un flux de données continu, **en ce que** la zone (53) pour les données de base transférées dans un flux de données continu et la zone (54) pour les données transférées par paquets de données sont adjacentes et **en ce que** la limite (59) entre la zone pour les données de base transférées dans un flux de données continu et la zone pour les données transférées par paquets de données est soit réglée de façon fixe, soit réglée en cours de service, en fonction de la capacité de transfert actuellement nécessaire.

13. Système de communication selon l'une quelconque des revendications 6 à 12, **caractérisé en ce que** la consigne ordonnant l'envoi de données sauvegardées dans le circuit d'interface du participant détenant l'adresse spéciale par l'intermédiaire de la ligne en boucle (28, 29) est une demande d'un canal libre par un participant désirant envoyer des données de base transférées dans un flux de données continu.

14. Système de communication selon l'une quelconque des revendications 1 à 13, **caractérisé en ce que** chaque participant qui est en mesure d'envoyer des données de base transférées dans un flux de données continu détient une adresse spéciale et/ou connaît une instruction spéciale à l'aide de laquelle des informations concernant l'affectation actuelle des canaux dans un paquet de données réceptionné sont directement écrites dans un registre correspondant.

15. Système de communication selon l'une quelconque des revendications précédentes, **caractérisé en ce qu'**un seul participant gère des informations complètes concernant l'affectation actuelle de canaux pour des données de base, qui sont transférées dans un flux de données continu.

16. Réseau de communication selon la revendication 15, **caractérisé en ce que** le participant qui gère les informations complètes concernant l'affectation actuelle des canaux est le participant qui génère la cadence du système.

17. Système de communication selon l'une quelconque des revendications précédentes, **caractérisé en ce que** la ligne en boucle est formée de guides d'ondes optiques (5 ; 28, 29) qui relient respectivement deux participants entre eux.

18. Système de communication selon l'une quelconque des revendications précédentes, destiné à être utilisé dans un véhicule automobile.
